# EUROPEAN PATENT APPLICATION

(11) **EP 1 717 551 A2**
(43) Date of publication of application: **02.11.2006**
(21) Application number: 06252294.1
(22) Date of filing: 28.04.2006
(51) Int. Cl.: G01C 19/56

(54) **Angular velocity sensor**

(30) Priority: 28.04.2005 JP 2005133645
(71) Applicant: Fujitsu Media Devices Limited, Yokohama-shi, Kanagawa 222-0033 (JP); FUJITSU LIMITED, Kawasaki-shi, Kanagawa 211-8588 (JP)
(72) Inventor: Ohta, Kazuhiro, Fujitsu Media Devices Limited, Yokohama-shi Kanagawa 222-0033 (JP); Tanaka, Hiroshi, Fujitsu Media Devices Limited, Yokohama-shi Kanagawa 222-0033 (JP); Hosokawa, Toshinobu, Fujitsu Media Devices Limited, Yokohama-shi Kanagawa 222-0033 (JP); Yachi, Masanori, Fujitsu Media Devices Limited, Yokohama-shi Kanagawa 222-0033 (JP); Miyashita, Tsutomu, Fujitsu Media Devices Limited, Yokohama-shi Kanagawa 222-0033 (JP); Ishikawa, Hiroshi, Fujitsu Limited, Kawasaki-shi Kanagawa 211-8588 (JP)
(74) Representative: Fenlon, Christine Lesley

(57) **Abstract**

An angular velocity sensor (100) includes a vibrator (10) for sensing an angular velocity, and a package (30) on which the vibrator (10) is mounted. The vibrator (10) is arranged in a diagonal direction of the package (30). The angular velocity sensor (100) includes a circuit board (50) that supports the package (30). The vibrator (10) is attached to the circuit board (50) so that the vibrator (10) is inclined to a vertical direction by a given angle.

## Description

### BACKGROUND OF THE INVENTION

### 1. Field of the Invention

The present invention generally relates to angular velocity sensors, and more particularly, to an angular velocity sensor using a tuning fork type vibrator.

### 2. Description of the Related Art

The angular sensor senses an angular velocity in rotation, and is applied to cameras for compensating for hand movements or vibrations, car navigation systems, and gyroscopes employed in, for example, automobiles and robots.

Generally, some problems such as sensing error or sensing in axes other than the sensing axis arise from a sensor mount situation in which the detection axis of the angular velocity sensor is inclined to the sensing reference plane. These problems make it difficult to accurately sense the angular velocity, and cause resultant problems in control systems using the angular velocity sensor.

For example, the angular velocity sensor is frequently housed in a dashboard in the automobile. In a case where a control system equipped with the angular velocity sensor is attached to the dashboard, when the sensing axis of the sensor is perpendicular to the ground serving as the reference plane, the angular velocity can be sensed accurately.

Actually, the dashboards of the recent vehicles are frequently inclined to the ground. When the control system is attached to the inclined dashboard, the detection axis of the angular velocity sensor is also inclined. This attachment causes increased error in sensing the angular velocity.

The following documents disclose angular velocity sensors attached so that a vibrator is attached to a base so as to be inclined with respect to the mounting surface of the base: International Publication No. WO03/100350A1 and Japanese Patent Application Publication No. 2003-227844.

Generally, the tuning fork type vibrator is housed in a package for protection, and the package is mounted on a board. The package is attached in an inclined state so that the vibrator has a slant. However, the inclined attachment of the package may increase the height of the package measured from the board. This constitutes a limiting factor of downsizing. Particularly, the sensor disclosed in Japanese Patent Application Publication No. 2003-227844 needs attachment parts for different slant angles of the vibrator. Thus, this sensor is structurally complex.

### SUMMARY OF THE INVENTION

Accordingly, it is desirable to provide a downsized angular velocity sensor.

According to an embodiment of the present invention there is provided an angular velocity sensor including: a vibrator sensing an angular velocity; and a package on which the vibrator is mounted, the vibrator being arranged in a diagonal direction of the package.

### BRIEF DESCRIPTION OF THE DRAWINGS

Preferred embodiments of the present invention will be described in detail based on the following figures, in which:
Figs. 1A, 1B and 1C show an angular velocity sensor in accordance with a first embodiment of the present invention;
Figs. 2A and 2B show an exemplary electrode pattern employed in the angular velocity sensor of the present invention;
Figs. 3A, 3B and 3C show a package employed in the angular velocity sensor of the first embodiment;
Fig. 4 shows an exemplary arrangement of electronic parts employed in the first embodiment;
Figs. 5A, 5B and 5C show other exemplary arrangements of electronic parts employed in the first embodiment;
Fig. 6 shows a tuning fork type vibrator attached to a circuit board so as to be inclined to the vertical direction in accordance with the first embodiment;
Fig. 7 shows an electrical connection between the circuit board and the package;
Figs. 8A and 8B show an angular velocity sensor in accordance with a second embodiment of the present invention;
Figs. 9A, 9B, 9C, 9D and 9E show a variation of the angular velocity sensor of the second embodiment in which the vibrator is attached in the vertical direction to a mount surface of the angular velocity sensor;
Figs. 10A, 10B, 10C and 10D show another variation of the angular velocity sensor of the second embodiment;
Figs. 11A and 11B show an angular velocity sensor in accordance with a third embodiment of the present invention;
Figs. 12A and 12B show exemplary lead frames employed in an embodiment of the present invention;
Figs. 13A and 13B show a variation of the angular velocity sensor of the second embodiment;
Figs. 14A, 14B and 14C show another variation of the angular velocity sensor of the second embodiment; and
Figs. 15A, 15B, 15C and 15D show exemplary arrangements of chip parts and an IC chip employed in an angular velocity sensor embodying the present invention.

### DESCRIPTION OF THE PREFERRED EMBODIMENTS

A description will now be given, with reference to the accompanying drawings, of embodiments of the present invention.

### (First Embodiment)

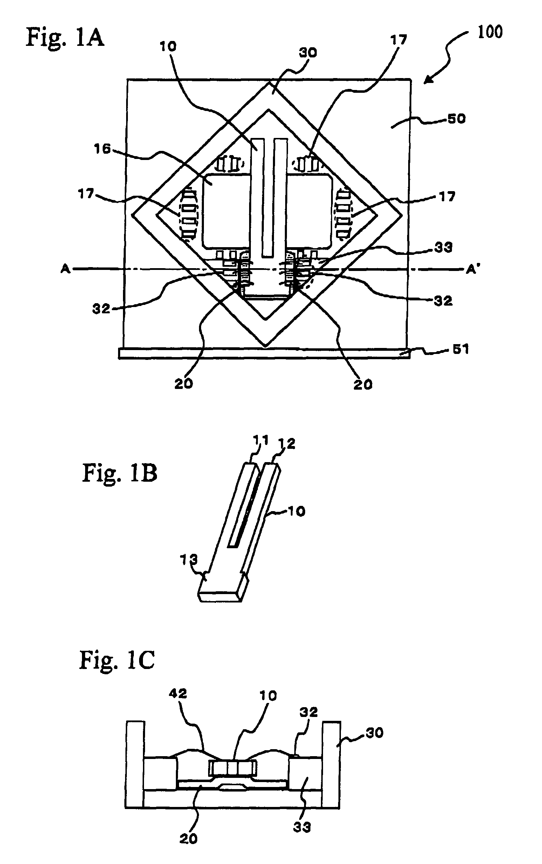

Figs. 1A through 1C show an angular velocity sensor 100 in accordance with a first embodiment of the present invention. More particularly, Fig. 1A is a plan view of the angular velocity sensor 100, Fig. 1B is a perspective view of a tuning fork type vibrator 10, and Fig. 1C is a cross-sectional view taken along a line A-A' shown in Fig. 1A.

Referring to Fig. 1A, the angular velocity sensor 100 is composed of the tuning fork type vibrator 10, a lead frame 20, a ceramic package 30, and a printed circuit board 50 on which the package that houses the vibrator 10 is mounted. The printed circuit board 50 is vertically attached to a support substrate 51.

Referring to Fig. 1B, the vibrator 10 has a base 13 and two arms 11 and 12, which extend from the base in an identical direction and are spaced apart from each other. As shown in Fig. 1C, the lead frame 20 supports the base 13, whereby the vibrator 10 is fixed to the package 30.

The package 30 is made of, for example, ceramic and has banks 33 for supporting multiple pads 32 within the package 30. Wires 42 are used to electrically connect the pads 32 on the banks 33 and the vibrator 10 with each other.

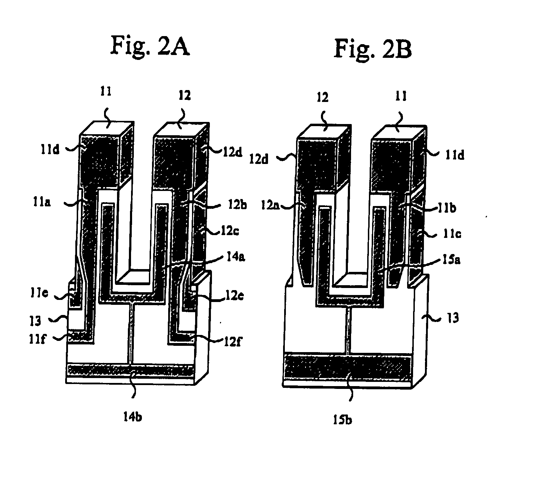

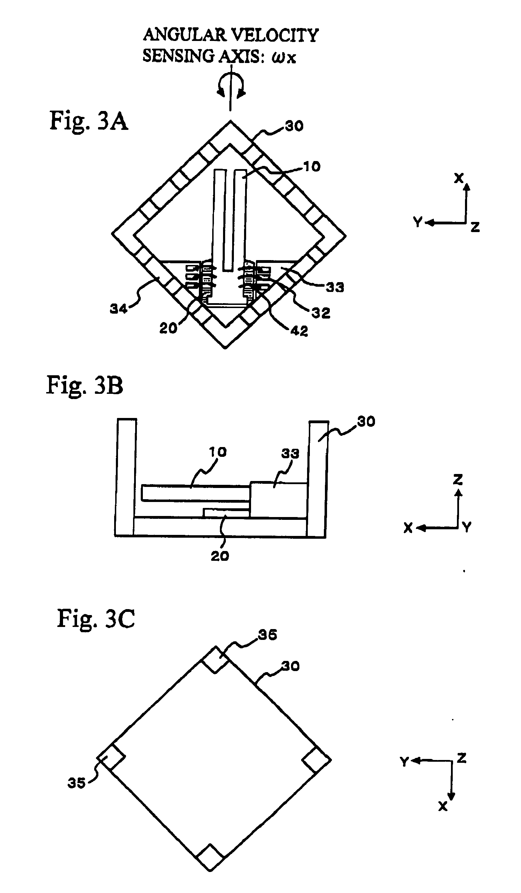

A further description will now be given of the electrical connections between the vibrator 10 and the package 30. As shown in Figs. 2A and 2B, the vibrator 10 has electrodes. Fig. 2A shows the front surface of the vibrator 10, and Fig. 2B shows the back surface thereof. The arm 11 is provided with detection electrodes 11a, 11b and 11c. The detection electrodes 11a and 11b are connected by an electrode 11d. An extraction electrode 11f is provided to the detection electrode 11a. The electrode 11c is connected to the extraction electrode 11e. Similarly, the arm 12 is provided with detection electrodes 12a, 12b and 12c. The detection electrodes 12a and 12b are connected by an electrode 12d. An extraction electrode 12f is provided to the electrode 12a. The electrode 12c is connected to the extraction electrode 12e. A drive electrode 14a is provided on the front surface of the vibrator 10, and is connected to an extraction electrode 14b. Similarly, a drive electrode 15a is provided on the back surface of the vibrator 10, and is connected to an extraction electrode 15b. The shape of the base 13 of the vibrator 10 shown in Fig. 3 is slightly different from that shown in Figs. 1A and 1B.

As shown in Fig. 3A, the extraction electrodes shown in Figs. 2A and 2B are connected through wires 42 to the pads 32 provided to the package 30. The pads 32 are provided on the bank 33, and are connected to interconnection lines provided in the package 30. Here, Fig. 3A is a plan view of the angular velocity sensor 100, Fig. 3B is a cross-sectional view thereof, and Fig. 3C is a bottom view thereof. The upper side of the package 30 is opened. The package 30 may have a square shape or a rhombus shape similar to the square shape, and has attachment surfaces on which external connection pads (terminals) 34 are provided. These pads 34 are connected to the electrodes of the vibrator 10 via the interconnection lines provided in the package 30. The bottom surface of the package 30 is provided with external connection pads (terminals) 35, which are connected to the interconnection lines provided in the package 30. Figs. 3A, 3B and 3C show coordinate axes X, Y and Z. The angular velocity sensor 100 senses an angular velocity ωx about the X axis.

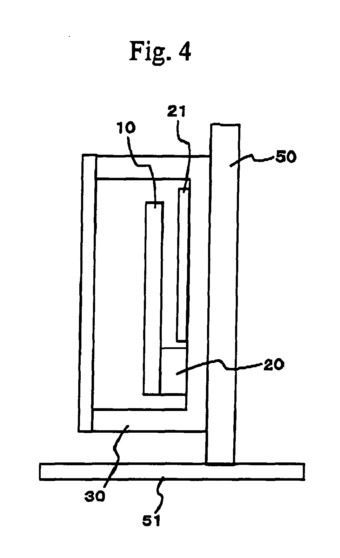

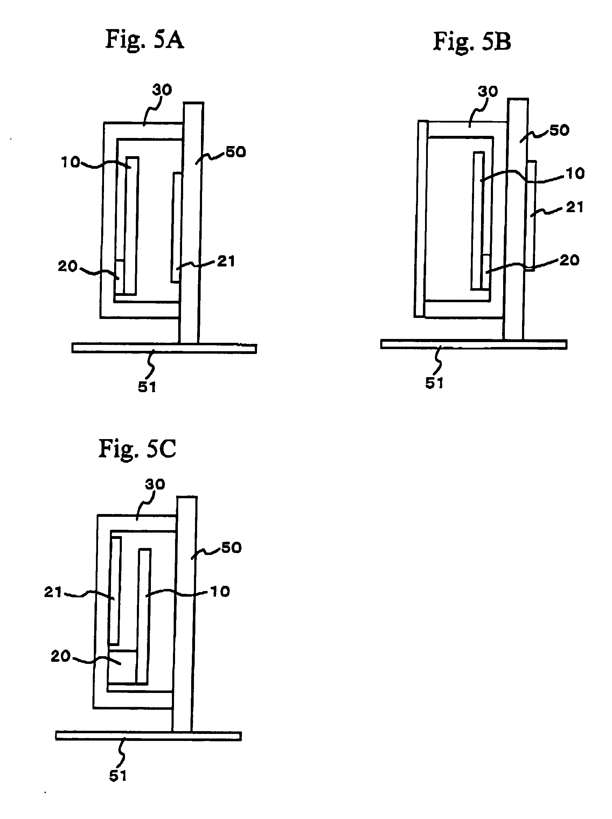

As shown in Fig. 1A, a mount area 16 for electronic parts 21 is defined on a portion of the package 30 immediately below the vibrator 10. Electrodes 17 for making electrical connections with the electronic parts 21 are provided on the package 30. Fig. 4 shows an exemplary arrangement in which the electronic parts 21 are mounted in the mount area 16. Other arrangements of the electronic parts 21 may be employed, as shown in Figs. 5A through 5C. Fig. 5A shows an arrangement in which the electronic parts 21 are mounted on the printed circuit board 50. Fig. 5B shows an arrangement in which the electronic parts 21 are mounted on a surface of the printed circuit board 50 opposite to the surface on which the package 30 is mounted. Fig. 5C shows an arrangement in which the electronic parts 21 are mounted on the package 30 together with the vibrator 10.

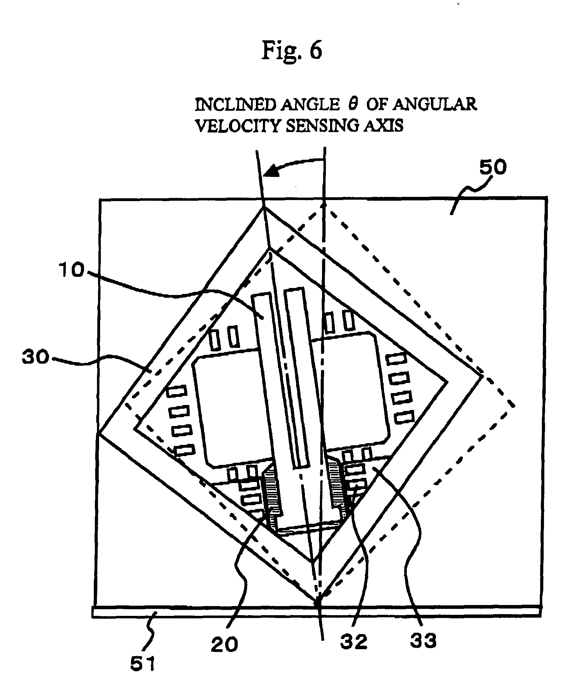

As shown in Fig. 1A, the angular velocity sensor 100 has an arrangement in which the vibrator 10 is disposed on a diagonal line of the square-shaped package 30. As shown in Fig. 6, when the package 30 is attached to the printed circuit board 50 so that the vibrator 10 is inclined with respect to the vertical direction by a predetermined angle θ, the height of the package 30 can be reduced, and the height of the angular velocity sensor 100 can be reduced. In the exemplary structure shown in Fig. 1A, the two diagonal lines of the package 30 are almost equal to each other because the package 30 has a square shape or a rhombus shape similar to the square shape. The package 30 may have a polygonal shape, which may have diagonal lines having identical or different lengths. In this case, the vibrator may be arranged on a diagonal line that connects two corners that are furthest away from each other than other corners. Advantages similar to those of the first embodiment will be obtained when the vibrator 10 is arranged on any of the diagonal lines irrespective of whether the diagonal lines of the polygonal shapes have identical or different lengths.

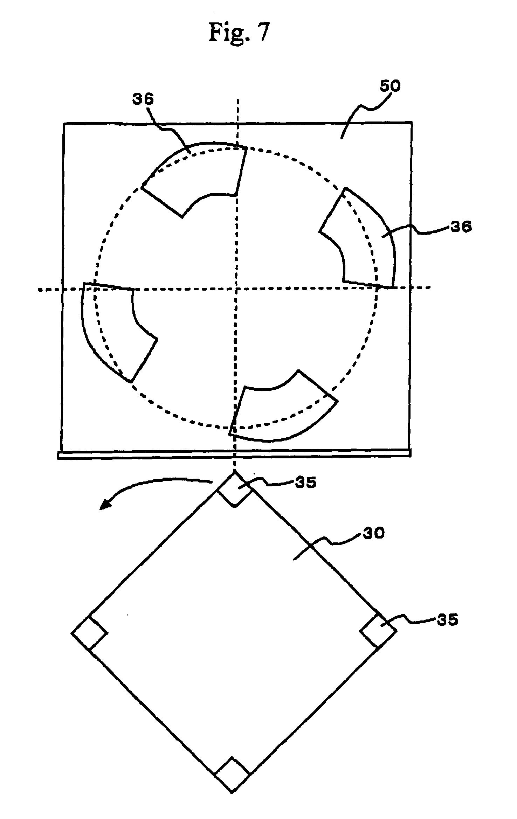

Fig. 7 shows the package 30 and connection portions used to make electrical connections with the printed circuit board 50. Multiple electrodes 36 are provided on a package mounting surface of the printed circuit board 50 and are used to make electrical connections with the external connection pads or terminals 35 of the package 30. The use of the multiple electrodes 36 is directed to maintaining the electrical connections when the package 30 is rotated. Further, the electrodes 36 have a size enough to keep the electrical connections between the package 30 and the printed circuit board 50 when the package 30 is rotated by a predetermined angle. That is, the multiple electrodes 36 are associated with the predetermined angle. The electrodes 36 are concentrically arranged on the printed circuit board 50 in order to secure the electrical connections between the package 30 and the printed circuit board 50 by rotating the package 30 on the printed circuit board 50 and thus adjusting the slant angle of the vibrator 10. The multiple electrodes 36 are arranged so as to maintain electrical connections between the package 30 and the printed circuit board 50 within a given range of rotation angle.

### (Second Embodiment)

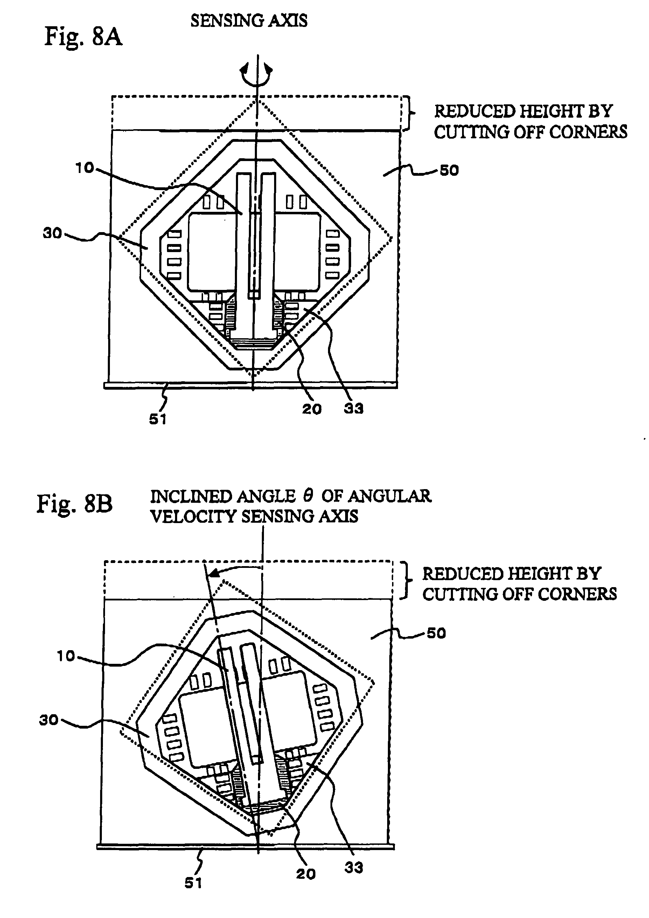

A second embodiment of the present invention will now be described. Referring to Figs. 8A and 8B, the second embodiment employs a package having a polygonal shape, which may be obtained by cutting off corner portions of the square-shaped package employed in the first embodiment. The package 30 of the second embodiment has a height less than the package 30 of the first embodiment. In Figs. 8A and 8S, the square shape depicted by a dotted line denotes the square-shaped package 30 employed in the first embodiment, and the polygonal package 30 employed in the second embodiment is depicted by a solid line. Fig. 8A shows the vibrator 10 that is vertically arranged to the support substrate 51. Fig. 8B shows the vibrator 10 that is inclined by an angle θ to the vertical direction. The inclined arrangement of the vibrator 10 is realized by rotating the package 30 on the printed circuit board 50. It can be seen from Fig. 8B that the height of the package 30 from the support substrate 51 is reduced even when the package 30 is in the rotated state, and the angular velocity sensor is downsized.

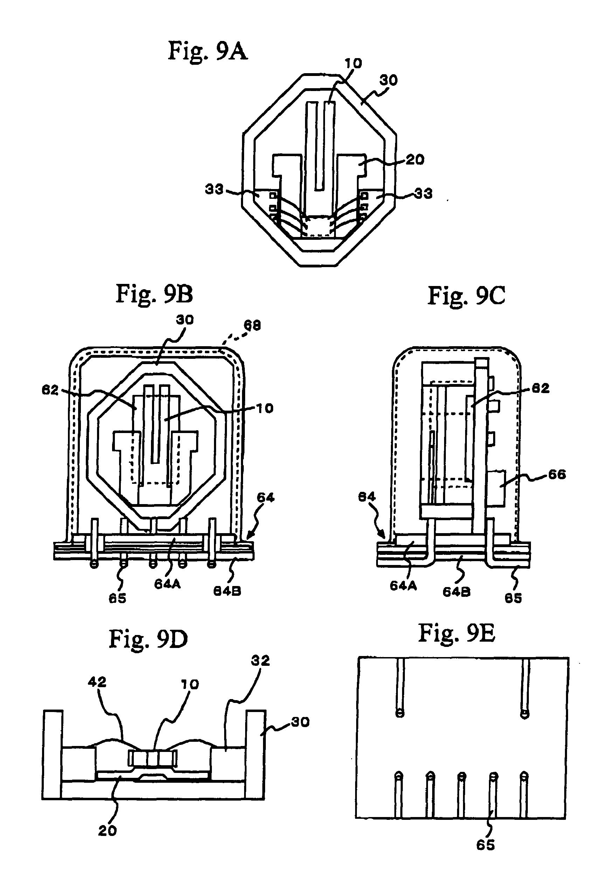

Figs. 9A through 9E show a structure in which the angular velocity sensor 100 shown in Figs. 8A and 8B, and the vibrator 10 is vertically held with respect to the mounting surface of the sensor 100. Fig. 9A is a plan view of the angular velocity sensor 100 shown in Fig. 8. Fig. 9B is a front view of the angular velocity sensor 100 housed in a cap in which the interior structure is seen through the cap, and Fig. 9C is a side view thereof. Fig. 9D is a side view of the packaged sensor 100, and Fig. 9E is a bottom view thereof.

The angular velocity sensor 100 has the printed circuit board 50 on which the package is attached, and a stem or support member 64 on which the printed circuit board 50 is vertically supported to the mounting surface of the sensor 100. The open side of the package 30 is attached to the printed circuit board 50. Electronic parts 66 are mounted on the printed circuit board 50, and the package 30 is positioned so as to cover the electronic parts 66. Other electronic parts 62 are provided on the backside of the printed circuit board 50. The tuning fork type vibrator 10 faces the electronic parts 62. The printed circuit board 50 is supported by the support member 64, and the sensing axis of the vibrator 10 coincides with the direction vertical to the support member 64. External connection pins 65 are connected to pads provided on the backside of the circuit board printed 50 except some connection pins 65. The external connection pins 65 and the support member 64 are integrally formed and are electrically isolated from each other. The external connection pins 65 are penetrated through a printed circuit board 64B, and extend to opposing sides of the printed circuit board 64B from a central portion on the bottom surface thereof (in the directions along the short sides of the printed circuit board 64B). The printed circuit board 64B has a multilayer structure. A cap 68 covers the package 30, the printed circuit board 50, and the support member 64 so that the interior of the angular velocity sensor 100 is hermetically sealed. The cap 68 may be fixed to the support member 64 by adhesive.

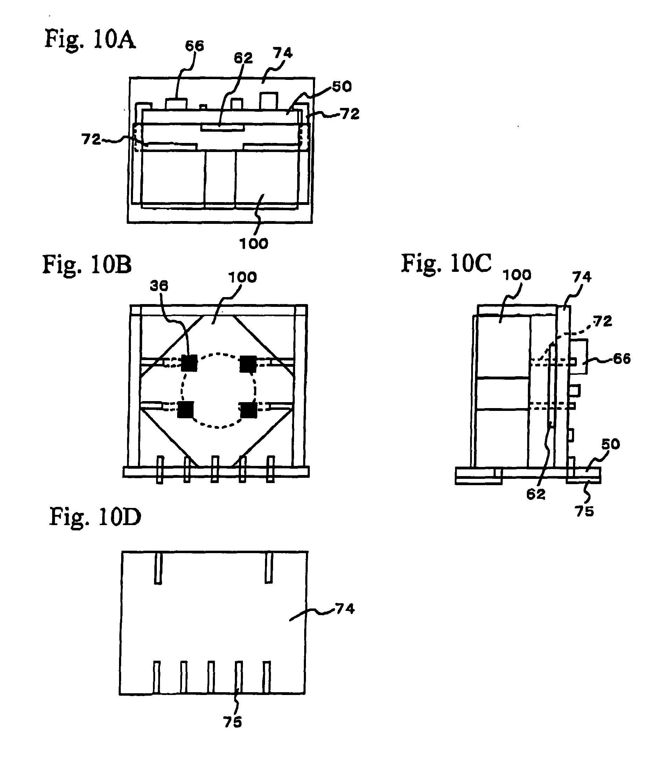

Another exemplary attachment structure of the angular velocity sensor 100 will now be explained with reference to Figs. 10A through 10D. This sensor 100 holds the vibrator 10 in the direction perpendicular to the attachment surface of the angular velocity sensor 100. Fig. 10A is a plan view of the angular velocity sensor 100. Fig. 10B is a front view of the angular velocity sensor 100 in which the interior structure is seen through, and Fig. 10C is a side view thereof. The Fig. 10D is a bottom view of the angular velocity sensor 100. The sensor 100 is attached to a support substrate 74 formed by molding. The printed circuit board 50 is attached to the support substrate 74. The sensor 100 is spaced apart from the printed circuit board 50. Multiple pads 36 are provided on the backside of the package 30. The pads are electrically connected to the electrodes of the vibrator 10 via the interconnection lines provided in the package 30. Multiple pin-like connection members 72 are connected to the pads 36. The connection members 72 extend to the surface of the printed circuit board 50 on which the electronic parts 66 are mounted, and are connected to pads provided thereon. Electronic parts 62 are mounted to the other surface of the printed circuit board 50. The electronic parts 62 face the package 30. Connection pins 75 are attached to the support substrate 74, and are electrically connected to the pads on the circuit board 70 except some pins 75. The vibrator 10 may be connected to an external device or circuit via the connection pins 75.

### (Third Embodiment)

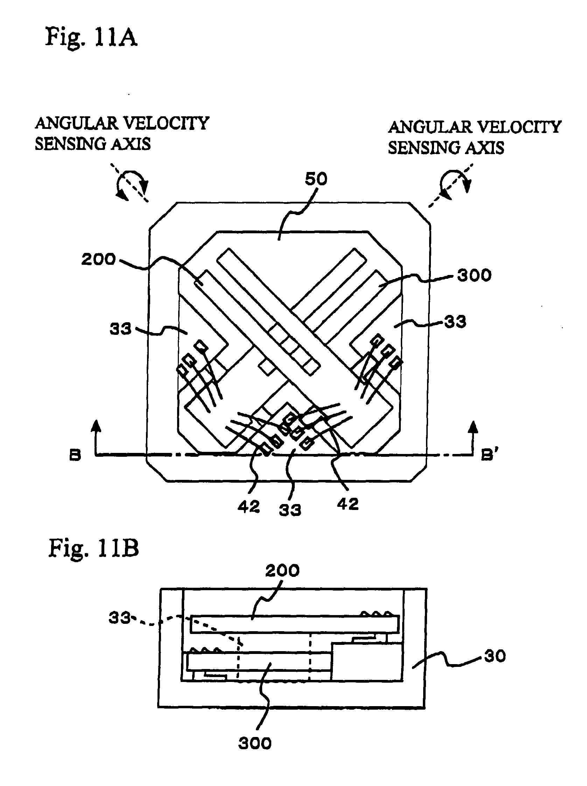

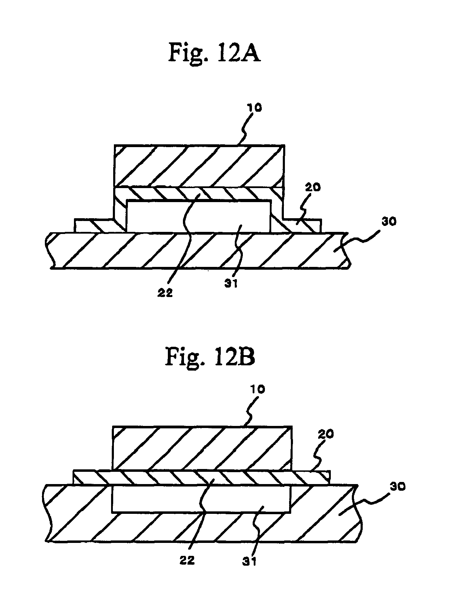

A description will now be given, with reference to Figs. 11A and 11B and Figs. 12A and 12B, of a third embodiment of the present invention. Fig. 11A is a plan view of the angular velocity sensor 100 of the present embodiment, and Fig. 11B is a cross-sectional view taken along a line B-B' shown in Fig. 11A. The angular velocity sensor 100 of the present embodiment has two tuning fork type vibrators 200 and 300 arranged within the single package 30 so as to cross each other in the thickness direction of the vibrators. The vibrators 200 and 300 are arranged in the diagonal directions of the package 100.

The sensing axes of the vibrators 200 and 300 are orthogonal to each other. That is, the angular velocities around the orthogonal sensing axes can be detected. The package 30 is made of, for example, ceramic and has banks 33 for supporting multiple pads 32 within the package 30. The wires 42 are used to electrically connect the pads 32 on the banks 33 and the vibrators 200 and 300. The vibrator 300 may be supported by the single lead frame 20 directly provided to the lower surface of the package 30, or by the lead frame provided on low banks in the package 30. The vibrator 200 may be supported by another single lead frame 20 provided on high banks in the package 30.

The lead frame 20 will now be described with reference to Figs. 12A and 12B. The lead frame 20 shown in Fig. 12A has a bent portion 22 having two right-angle corners and having an approximately C-shaped cross section. The bent portion 22 of the lead frame 20 supports the base 13 of the vibrator 10. The bent portion 22 defines a spacing 31. The opposing portions that define the bent portion 22 together with the top flat portion are formed vertically, as shown in Fig. 12A. Alternatively, the opposing portions may be inclined. The base 13 of the vibrator 10 is fixed to the top portion of the bent portion 22 by adhesive such as epoxy resin adhesive. This fixing can be realized with high productivity.

The spacing 31 defined by the bent portion 22 that supports the base 13 of the vibrator 10 functions to restrain a frequency change that occurs when the package 30 is attached to the printed circuit board 50. It is thus possible to provide the downsized angular velocity sensor 100 capable of sensing the angular velocity.

In the third embodiment, the two vibrators 200 and 300 having different sensing axes are integrally housed in the single package 30. It is thus possible to provide the downsized angular velocity sensor 100 capable of sensing the angular velocities in the multiple directions.

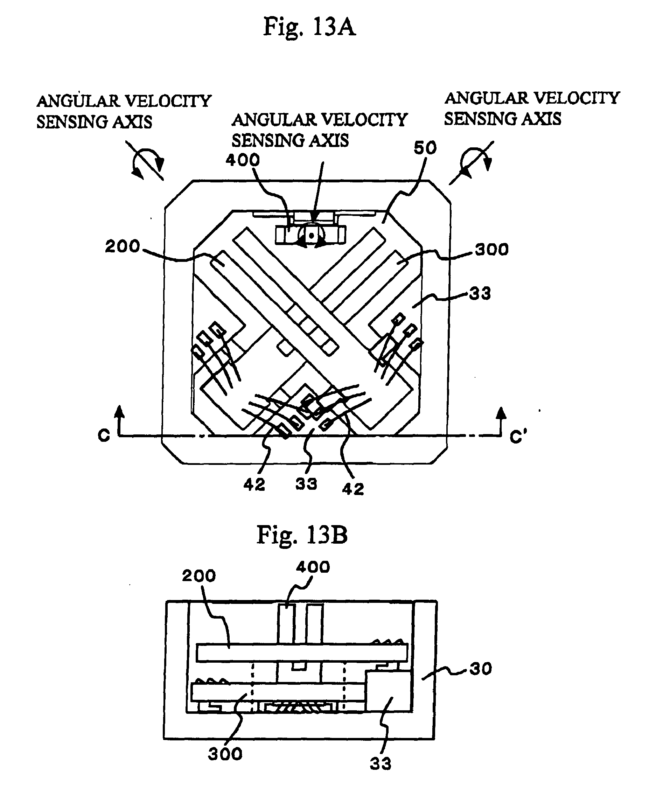

Figs. 13A and 13B show a variation of the third embodiment, which variation is capable of sensing angular velocities about three axes. Fig. 13A is a plan view of the angular velocity sensor 100 of the variation, and Fig. 13B is a cross-sectional view taken along a line C-C' shown in Fig. 13A. The vibrators 200 and 300 shown in Figs. 13A and 13B sense the angular velocities about the X and Y axes, respectively. A tuning fork type vibrator 400 is provided to sense the angular velocity about the 2 axis. That is, the sensing axis of the vibrator 400 is orthogonal to the sensing axes of the vibrators 200 and 300. As shown in Fig. 13B, the vibrator 400 is attached to the package 30 so that the two arms thereof extend upwards. The vibrators 200, 300 and 400 are integrally housed in the single package 30. It is thus possible to provide the downsized angular velocity sensor capable of sensing the angular velocities about the three orthogonal sensing axes.

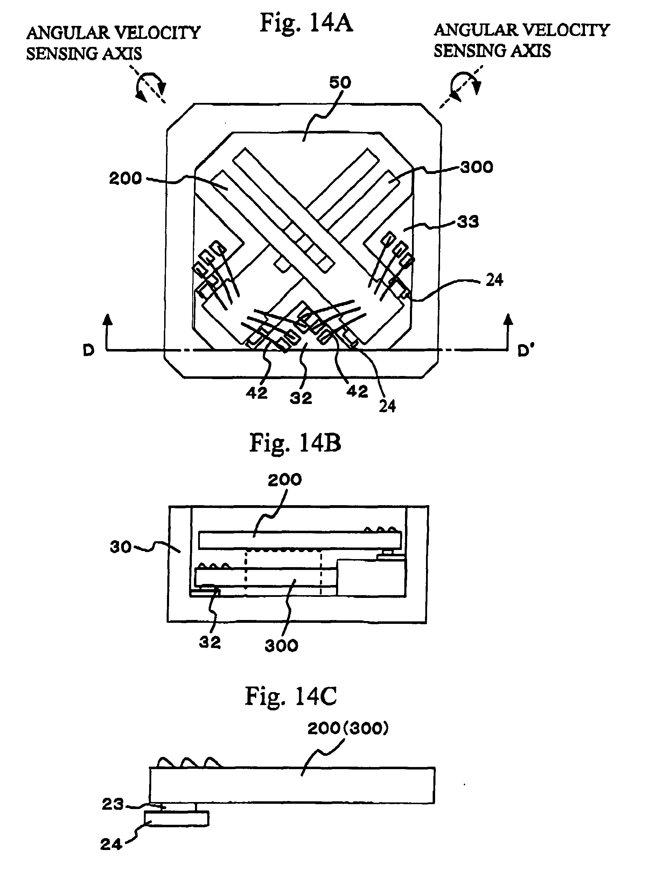

Figs. 14A, 14B and 14C show another variation of the angular velocity sensor 100 shown in Figs. 12A and 12B. Fig. 14A is a plan view of the angular velocity sensor 100 of the present variation, and Fig. 14B is a cross-sectional view taken along a line D-D' shown in Fig. 14B. Fig. 14C is an enlarged view of a lead frame employed in the present variation. The lead frame is provided on a pair of protrusions 24, which define a spacing between the lead frame 23 and the bottom of the package 30. It is thus possible to restrain a frequency change that occurs when the package 30 is attached to the printed circuit board 50. It is thus possible to provide the downsized angular velocity sensor 100 capable of sensing the angular velocities about the two sensing axes.

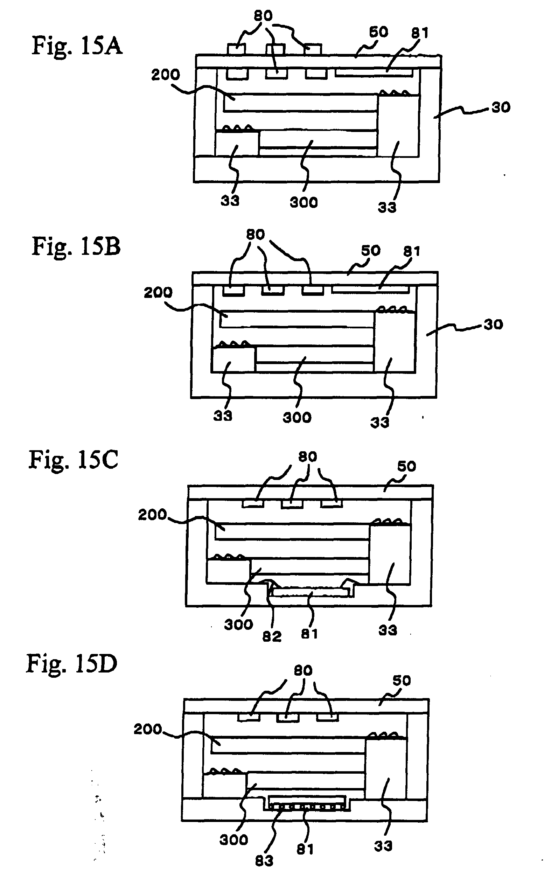

Referring to Figs. 15A through 15D, there are illustrated exemplary structures in which chip parts 80 and an IC chip 81 are mounted on the printed circuit board 50. In the structure shown in Fig. 15A, the printed circuit board 50 and the package 30 are connected together by electrically conductive paste, which may be electrically conductive resin or anisotropically conductive resin. With this structure, the printed circuit board 50 and the package 30 can be electrically and mechanically connected. The printed circuit board 50 functions as a lid to the package 30, so that the height of the sensor can be reduced. The opposing surfaces of the circuit board can be used to mount electronic parts, so that the chip parts 80 and the IC chip 81 can be mounted efficiently.

In the structure shown in Fig. 15B, the chip parts 80 and the IC chip 81 are mounted on only one of the printed circuit board 50. In the structure shown in Fig. 15C, a step portion is formed on the bottom surface of the package 30, and the IC chip 81 is mounted in the step portion. Wires 82 are used to make electrical connections between the package 30 and the IC chip 81. This structure increases the degree of freedom to layout the parts on the printed circuit board 50. In the structure shown in Fig. 15D, the IC chip 81 is flip-chip mounted on the bottom of the package 30 for making electrical connections with the package 30. This structure does not need the height for looped wires and facilitates the height lowering.

The present invention is not limited to the specifically described embodiments and variations, but include other embodiments, variations and modifications within the scope of the claimed invention. For example, the tuning fork type vibrator may have three or four arms.

The present invention is based on Japanese Patent Application No. 2005-133645 filed on April 28, 2005, and the entire disclosure of which is hereby incorporated by reference.

## Claims

1. An angular velocity sensor comprising:
a vibrator sensing an angular velocity; and
a package on which the vibrator is mounted,
the vibrator being arranged in a diagonal direction of the package.

2. The angular velocity sensor as claimed in claim 1, further comprising a circuit board that supports the package,
the vibrator being attached to the circuit board so that the vibrator is inclined to a vertical direction by a predetermined angle.

3. The angular velocity sensor as claimed in claim 1 or 2, further comprising multiple vibrators including said vibrator,
the multiple vibrators being arranged in different diagonal directions of the package so that sensing axes of the multiple vibrators are in the different diagonal directions.

4. The angular velocity sensor as claimed in claim 1, 2 or 3, wherein the vibrator is arranged on a diagonal line that connects two corners that are furthest away from each other than other corners.

5. The angular velocity sensor as claimed in claim 2, wherein the circuit board has multiple electrodes associated with the predetermined angle.

6. The angular velocity sensor as claimed in claim 2, wherein the circuit board has multiple electrodes arranged so as to maintain electrical connections between the package and the circuit board within a given range of rotation angle in which the predetermined angle is included.

7. The angular velocity sensor as claimed in claim 2, wherein the circuit board has multiple electrodes arranged concentrically.

8. The angular velocity sensor as claimed in any preceding claim, wherein the package has a polygonal shape in which corner portions in the diagonal direction are cut off.

9. The angular velocity sensor as claimed in any preceding claim, further comprising a lead frame that fixes the vibrator to the package,
the lead frame having a bent portion so as to define a spacing between the package and the lead frame.

10. The angular velocity sensor as claimed in any one of claims 1 to 8, further comprising a lead frame that fixes the vibrator to the package,
the lead frame having a flat portion that supports the vibrator,
the package having a recess portion that the flat portion bridges so that a spacing is defined between the package and the lead frame.

11. The angular velocity sensor as claimed in claim 3, or in any one of claims 4, 8, 9 or 10 when read as appended to claim 3, wherein the multiple vibrators are positioned at different heights from a surface of the package.

12. The angular velocity sensor as claimed in claim 3, or in any one of claims 4, 8, 9 or 10 when read as appended to claim 3, wherein the multiple vibrators cross each other in a height direction of the package.

13. The angular velocity sensor as claimed in claim 3, or in any one of claims 4, 8, 9 or 10 when read as appended to claim 3, further comprising lead frames that fix the multiple vibrators to the package,
the package having banks that support the lead frames so that the multiple vibrators cross each other.

14. The angular velocity sensor as claimed in claim 1, further comprising a circuit board that supports the package, and a support substrate that supports the circuit board vertically with respect to a mount surface of the angular velocity sensor.

15. The angular velocity sensor as claimed in claim 14, further comprising chip parts mounted on the circuit board so that the package covers the chip parts.

16. The angular velocity sensor as claimed in claim 1, further comprising a support substrate that supports the package, connection members supported by the package, and a circuit board electrically connected to the package via the connection members.

17. The angular velocity sensor as claimed in claim 16, further comprising chip parts mounted on the circuit board,
the package supporting the circuit board via the connection members so as to cover the chip parts.
